# EUROPÄISCHE PATENTSCHRIFT

(11) **EP 3 498 136 B1**
(45) Veröffentlichungstag und Bekanntmachung des Hinweises auf die Patenterteilung: **30.06.2021**
(21) Anmeldenummer: 18211707.7
(22) Anmeldetag: 11.12.2018
(51) Int. Cl.: A47J 37/12, A47J 43/046, A47J 27/00, A47J 27/21

(54) **BODENTEIL FÜR EINE KÜCHENMASCHINE**
BASE SECTION FOR A KITCHEN APPLIANCE
PARTIE DE FOND POUR UNE MACHINE DE CUISINE

(30) Priorität: 15.12.2017 DE 102017130234
(43) Veröffentlichungstag der Anmeldung: 19.06.2019
(73) Patentinhaber: Eichenauer Heizelemente GmbH & Co. KG, 76870 Kandel (DE)
(72) Erfinder: ARENS, Helmut, 76863 Herxheim (DE); KLEIN, Maximilian, 67480 Edenkoben (DE)
(74) Vertreter: Hofstetter, Schurack & Partner

(56) Entgegenhaltungen:
- DE-A1-102008 038 783
- FR-A1- 2 829 009
- US-A1- 2010 264 127

## Beschreibung

Die Erfindung betrifft ein Bodenteil für eine zum Erwärmen von wenigstens einem Lebensmittel ausgebildete Küchenmaschine. Das Bodenteil umfasst ein erstes Plattenelement, dessen Oberseite im Betrieb des Bodenteils mit dem wenigstens einen Lebensmittel in Kontakt ist. Mit einem zweiten Plattenelement des Bodenteils ist wenigstens ein elektrisches Heizelement des Bodenteils verbunden.

Die FR 2 829 009 A1 beschreibt einen Wasserkocher mit einem aus Edelstahl gebildeten Boden, wobei zwischen dem Boden und einer einen elektrischen Widerstand umfassenden Heizeinrichtung eine Wärmediffusionsplatte angeordnet ist. Eine zentrale Schicht der Wärmediffusionsplatte wird vor einem Verlöten der Wärmediffusionsplatte mit dem Boden und der Heizeinrichtung oberseitig und unterseitig mit einer als Lotmaterial dienenden Plattierungsschicht aus einer Al-Si-Legierung versehen.

Die DE 10 2008 038 783 B4 beschreibt eine Küchenmaschine mit einem Rührgefäß. An einem Rührgefäßboden des Rührgefäßes ist eine Widerstandsheizung vorgesehen, welche zwei gesondert ansteuerbare Heizabschnitte umfasst.

Des Weiteren beschreibt die EP 0 821 905 B1 ein Wasserkochgerät mit einem Kessel, welcher einen Kesselboden umfasst. An einer Unterseite des Kesselbodens ist eine Wärmeverteilerplatte mit einem Rohrheizkörper wärmeleitend verlötet. An der Wärmeverteilerplatte angeordnete Laschen dienen der Fixierung des Rohrheizkörpers an der Unterseite der Wärmeverteilerplatte während des Lötprozesses.

Bei einer derartigen Anordnung des Rohrheizkörpers an der Wärmeverteilerplatte, welche direkt an dem Kesselboden anliegt, kommt es im Betrieb zu einer vergleichsweise ungleichmäßigen Erwärmung beziehungsweise Temperaturverteilung im Bereich des Kesselbodens. Bei einem Wasserkocher ist dies von untergeordneter Bedeutung. Bei einem Bodenteil für eine Küchenmaschine, welches im Betrieb der Küchenmaschine einem Erwärmen von in einem Heiztopf der Küchenmaschine vorhandenen Lebensmitteln dient, ist dies jedoch nachteilig.

Aufgabe der vorliegenden Erfindung ist es daher, ein im Hinblick auf eine gleichmäßige Erwärmung verbessertes Bodenteil für eine Küchenmaschine bereitzustellen.

Diese Aufgabe wird durch ein Bodenteil mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Das erfindungsgemäße Bodenteil für eine Küchenmaschine, welche zum Erwärmen von wenigstens einem Lebensmittel ausgebildet ist, umfasst ein erstes Plattenelement, dessen Oberseite im Betrieb des Bodenteils mit dem wenigstens einen Lebensmittel in Kontakt ist. Das Bodenteil umfasst ein zweites Plattenelement, welches mit wenigstens einem elektrischen Heizelement des Bodenteils verbunden ist. Das Bodenteil weist ein drittes Plattenelement auf, dessen Oberseite mit einer Unterseite des ersten Plattenelements verbunden ist. Eine Unterseite des dritten Plattenelements ist mit einer Oberseite des zweiten Plattenelements verbunden. Das dritte Plattenelement weist eine größere Wärmeleitfähigkeit auf als das erste Plattenelement. Des Weiteren ist eine Dicke des dritten Plattenelements größer als eine Dicke des zweiten Plattenelements. Aufgrund der größeren Wärmeleitfähigkeit des dritten Plattenelements sorgt dieses quasi als thermische Masse beziehungsweise als Wärmeleitplatte für eine besonders gute und gleichmäßige Verteilung der im Heizbetrieb des Bodenteils oder Heizbodens von dem wenigstens einen elektrischen Heizelement abgegebenen Wärme innerhalb des ersten Plattenelements.

Die drei Plattenelemente sind stoffschlüssig miteinander verbunden. Dadurch ist ein besonders inniger Kontakt der Plattenelemente miteinander und somit eine gute Wärmeübertragung von den Heizelementen über das zweite Plattenelement und das dritte Plattenelement hin zu dem ersten Plattenelement erreichbar.

Hierbei sind die Plattenelemente miteinander verlötet. Beispielsweise können zum Verlöten des dritten Plattenelements und des ersten Plattenelements miteinander die Unterseite des ersten Plattenelements und/oder die Oberseite des dritten Plattenelements mit einem Lot, insbesondere mit einer Lotplattierung, versehen sein, welches dann beim Löten aufschmilzt und für die stoffschlüssige Verbindung des dritten Plattenelements mit dem ersten Plattenelement sorgt. Bevorzugt ist lediglich die Oberseite des dritten Plattenelements mit einer Lotplattierung versehen. Dies verringert den Aufwand beim Verlöten des dritten Plattenelements und des ersten Plattenelements miteinander.

Desgleichen kann zum Verlöten des zweiten Plattenelements und des dritten Plattenelements miteinander eine Unterseite des dritten Plattenelements und/oder die Oberseite des zweiten Plattenelements mit einem Lot, insbesondere mit einer Lotplattierung, versehen sein, welches dann beim Löten aufschmilzt und für die stoffschlüssige Verbindung des zweiten Plattenelements mit dem dritten Plattenelement sorgt. Bevorzugt ist lediglich die Oberseite des zweiten Plattenelementes mit einer Lotplattierung versehen.

Zusätzlich oder alternativ zu dem stoffschlüssigen Verbinden der drei Plattenelemente miteinander durch Löten kann bei dem erfindungsgemäßen Bodenteil das wenigstens eine Heizelement durch Löten stoffschlüssig mit dem zweiten Plattenelement verbunden sein. Dadurch ist ein besonders direkter Wärmeübergang von dem wenigstens einen Heizelement auf das zweite Plattenelement erreichbar.

Im Betrieb beziehungsweise Heizbetrieb des Bodenteils wird das wenigstens eine elektrische Heizelement mit elektrischer Energie beaufschlagt, sodass das wenigstens eine elektrische Heizelement Wärme zum Erhitzen beziehungsweise Erwärmen des wenigstens einen Lebensmittels abgibt. Die im Verhältnis zum ersten Plattenelement größere Wärmeleitfähigkeit des dritten Plattenelements sorgt für vergleichsweise geringe Temperaturgradienten in der Ebene des dritten Plattenelements und somit auch in der Ebene des ersten Plattenelements, welches an dem dritten Plattenelement anliegt beziehungsweise mit dem dritten Plattenelement in wärmeleitendem Kontakt steht. Die thermische Masse des dritten Plattenelements bewirkt also eine sehr gleichmäßige Erwärmung und eine sehr gleichmäßige Temperaturverteilung in der Ebene des ersten Plattenelements, dessen Oberseite mit dem Lebensmittel in Kontakt ist. Dies ist beispielsweise dann von Bedeutung, wenn das Lebensmittel gebraten werden soll. Denn so kann ein gleichmäßiges Anbraten des wenigstens einen Lebensmittels erreicht werden.

Zudem bewirkt die thermische Masse des dritten Plattenelements eine thermische Trägheit, welche die Steuerung beziehungsweise Regelung des wenigstens einen Heizelements begünstigt. Denn üblicherweise erfolgt der Betrieb des wenigstens einen Heizelements eines Bodenteils für eine Küchenmaschine derart, dass das wenigstens eine Heizelement abgeschaltet wird oder mit einer verringerten Leistung betrieben wird, wenn ein bestimmter Schwellenwert einer Temperatur überschritten wird. Bei einer ungleichmäßigen Temperaturverteilung können sich Stellen mit stärkerer Erwärmung, also sogenannte Hotspots, ausbilden, welche dann zum Verringern der Leistung beziehungsweise zum Abschalten des wenigstens einen Heizelements führen. Dies ist jedoch ungünstig, wenn in Bereichen des ersten Plattenelements, welche an den Hotspot beziehungsweise die Hotspots angrenzen, noch nicht die gewünschte Temperatur vorliegt. Denn dann kann ein zuzubereitendes Lebensmittel beispielsweise nicht gleichmäßig angebraten werden. Durch die besonders gleichmäßige Wärmeverteilung im Bereich des ersten Plattenelements, welche durch die verhältnismäßig große Wärmeleitfähigkeit des dritten Plattenelements bewirkt wird, werden derartige Probleme vermieden.

Die Regelung des wenigstens einen Heizelements gestaltet sich also bei dem Bodenteil, welches das dritte Plattenelement mit der vergleichsweise großen Wärmeleitfähigkeit aufweist, besonders einfach und praxistauglich. Durch die vergleichsweise hohe thermische Masse des dritten Plattenelements ist nämlich eine Robustheit gegenüber in kritischen Betriebszuständen (also insbesondere bei einer angestrebten besonders starken Erwärmung des Lebensmittels) auftretenden Hotspots gegeben. Das Bodenteil ist dadurch wesentlich gegenüber dem Stand der Technik verbessert, insbesondere gegenüber einem Bodenteil, bei welchem die Beheizung über Dickschichtheizelemente erfolgt. Bei solchen Dickschichtheizelementen, welche lediglich auf das erste Plattenelement aufgedruckt sind, kommt es häufig zu unmittelbaren oder frühen Ausfällen der Heizelemente aufgrund großer lokaler Temperaturunterschiede im Betrieb des Bodenteils. Durch das Bodenteil, welches das dritte Plattenelement mit der vergleichsweise großen Wärmeleitfähigkeit aufweist, können diese großen Temperaturunterschiede verhindert werden.

Durch das Verbinden des dritten Plattenelements mit dem ersten, oberhalb des dritten Plattenelements angeordneten Plattenelement einerseits und mit dem zweiten, unterhalb des dritten Plattenelements angeordneten zweiten Plattenelement andererseits, besteht eine sehr direkte Wärmeleitung von dem wenigstens einen Heizelement über das zweite und das dritte Plattenelement hin zum ersten Plattenelement, welches mit dem Lebensmittel beziehungsweise Kochgut in Kontakt steht. Es wird also eine besonders gleichmäßige Erwärmung des Bodenteils beziehungsweise Topfbodens der Küchenmaschine beziehungsweise des Küchenautomaten erreicht. Dementsprechend ist ein im Hinblick auf eine gleichmäßige Erwärmung verbessertes Bodenteil für eine Küchenmaschine geschaffen.

Vorzugsweise sind an einer Unterseite des zweiten Plattenelements wenigstens zwei elektrische Heizelemente angeordnet, welche insbesondere als Rohrheizkörper ausgebildet sein können. Auch dies verbessert die gleichmäßige Wärmeverteilung im Bereich des ersten Plattenelements im Betrieb des Bodenteils.

Vorzugsweise sind die wenigstens zwei elektrischen Heizelemente U-förmig ausgebildet. Hierbei erstrecken sich zwei Schenkel eines ersten der elektrischen Heizelemente in eine erste Richtung hin zu freien Enden des ersten Heizelements.

Zwei Schenkel eines zweiten der elektrischen Heizelemente erstrecken sich in eine der ersten Richtung entgegengesetzte Richtung hin zu freien Enden des zweiten Heizelements. Mit anderen Worten sind die freien Enden der U-förmig ausgebildeten elektrischen Heizelemente einander gegenüberliegend angeordnet. Die insbesondere als Rohrheizkörper ausgebildeten Heizelemente können also hufeisenförmig gebogen und ineinander verschränkt sein. Auf diese Weise lässt sich mittels insbesondere zweier elektrische Heizelemente eine sehr gleichmäßige Verteilung der Leistung der Heizelemente im Betrieb derselben erreichen. Diese gleichmäßige Leistungsverteilung ist ebenfalls der gleichmäßigen Erwärmung des ersten Plattenelements und somit des Bodens der Küchenmaschine im Heizbetrieb des Bodenteils zuträglich.

Vorzugsweise sind die beiden Schenkel des ersten Heizelements in radialer Richtung näher an einem äußeren Rand des zweiten Plattenelements angeordnet als die beiden Schenkel des zweiten Heizelements. Mit anderen Worten umgreifen also die beiden Schenkel des ersten Heizelements das zweite Heizelement bereichsweise. Dies begünstigt die sehr gleichmäßige Verteilung der von den Heizelementen abgegebenen Wärmeleistung im Bereich des zweiten Plattenelements beziehungsweise in der Ebene des zweiten Plattenelements zusätzlich.

Es kann zum Zwecke einer gleichmäßigen Verteilung der von den Heizelementen abgegebenen Wärmeleistung auch vorgesehen sein, dass die beiden Heizelemente derart verschränkt sind, dass jeweils ein erster Schenkel eines der beiden Heizelemente zwischen den beiden Schenkeln des anderen Heizelements angeordnet ist, wobei der zweite Schenkel des Heizelements in radialer Richtung von dem anderen Heizelement beabstandet ist.

Als weiter vorteilhaft hat es sich gezeigt, wenn die wenigstens zwei Heizelemente elektrisch parallel geschaltet sind. Denn so lässt sich eine gleichzeitige elektrische Ansteuerung der Heizelemente beziehungsweise Rohrheizkörper sehr einfach realisieren, und im Betrieb oder Heizbetrieb des Bodenteils steht die von den wenigstens zwei Heizelementen bereitgestellte Wärme unmittelbar und sehr rasch zum Erhitzen beziehungsweise Erwärmen des wenigstens einen Lebensmittels zur Verfügung.

Vorzugsweise sind das zweite Plattenelement und das dritte Plattenelement aus demselben, gut Wärme leitenden Material gebildet. Denn so sorgt auch bereits das zweite Plattenelement aufgrund seiner vergleichsweise großen Wärmeleitfähigkeit für eine gleichmäßige Temperaturverteilung von dem wenigstens einen Heizelement hin zu dem dritten Plattenelement. Zum Bereitstellen der vergleichsweise großen Wärmeleitfähigkeit des zweiten Plattenelements und des dritten Plattenelements hat es sich als vorteilhaft gezeigt, wenn das zweite Plattenelement und das dritte Plattenelement aus einer Aluminiumlegierung gebildet sind.

Bevorzugt ist das zweite Plattenelement nur höchstens halb so dick wie das dritte Plattenelement. Dadurch lassen sich Haltelemente an dem zweiten Plattenelement besonders leicht ausbilden, durch welche sich beispielsweise das wenigstens eine Heizelement in seiner Lage bezogen auf das zweite Plattenelement fixieren lässt.

Von Vorteil ist es weiterhin, wenn das erste Plattenelement aus einem Edelstahl gebildet ist. Denn dies ist beim Zubereiten des wenigstens einen Lebensmittels in der mit dem Bodenteil ausgestatteten Küchenmaschine wünschenswert, da das erste Plattenelement während des Garprozesses beziehungsweise Bratprozesses mit dem Lebensmittel in Kontakt ist.

Als weiter vorteilhaft hat es sich gezeigt, wenn das zweite Plattenelement wenigstens ein Halteelement aufweist, durch welches das wenigstens eine Heizelement in seiner Lage bezogen auf das zweite Plattenelement fixiert ist. Dadurch kann besonders gut eine gewünschte Positionierung des wenigstens einen Heizelements an dem zweiten Plattenelement sichergestellt werden. Beispielsweise können als derartige Halteelemente Laschen oder dergleichen vorgesehen sein, welche aus dem zweiten Plattenelement herausgeschnitten und zu dem wenigstens einen Heizelement hin umgebogen sind. Dann lässt sich das wenigstens eine Heizelement, welches insbesondere als Rohrheizkörper ausgebildet ist, sehr einfach und sicher in seiner Lage bezogen auf das zweite Plattenelement beim Verlöten positionieren.

Vorzugsweise sind die Plattenelemente durch Fixierelemente relativ zueinander in ihrer Lage fixiert. Die Fixierelemente können insbesondere durch an dem zweiten Plattenelement ausgebildete Laschen bereitgestellt sein. Beispielsweise kann eine umgebogene Lasche des zweiten Plattenelements in eine Vertiefung eingreifen, welche etwa in dem dritten Plattenelement ausgebildet ist. Zusätzlich oder alternativ kann eine nach Art eines Vorsprungs an dem zweiten Plattenelement ausgebildete Lasche in eine Aussparung eingreifen, welche in einem zu dem zweiten Plattenelement hin umgebogenen Rand des ersten Plattenelements ausgebildet ist. Des Weiteren kann vorgesehen sein, dass eine sich in der Ebene des zweiten Plattenelements erstreckende, nach Art eines Fortsatzes oder Vorsprungs ausgebildete Lasche an einem zu dem zweiten Plattenelement hin umgebogenen Rand des ersten Plattenelements anliegt beziehungsweise abgestützt ist.

Derartige Fixierelemente dienen also dem Positionieren der drei Plattenelemente und der Rohrheizkörper gegenüber einander, etwa vor und während eines Lötvorgangs, bei welchem die Plattenelemente und die Rohrheizkörper stoffschlüssig miteinander verbunden werden. Für ein derartiges stoffschlüssiges Verbinden ist es nämlich vorteilhaft, wenn die Plattenelemente und die Rohrheizkörper relativ zueinander in einer definierten Lage gehalten sind.

Vorzugsweise sind Abmessungen des zweitem Plattenelements und des dritten Plattenelements in einer zu dem ersten Plattenelemente parallelen Ebene zumindest im Wesentlichen Abmessungen des ersten Plattenelements in der Ebene des ersten Plattenelements gleich. Mit anderen Worten erstrecken sich also alle drei Plattenelemente im Wesentlichen über den gesamten Heizboden. Auch dies ist einer gleichmäßigen Verteilung der Wärme in der Ebene des ersten Plattenelements im Heizbetrieb des Bodenteils zuträglich.

Schließlich hat es sich als vorteilhaft gezeigt, wenn die drei Plattenelemente miteinander fluchtende Aussparungen aufweisen, welche zum Hindurchführen einer Rührvorrichtung der Küchenmaschine durch das Bodenteil hindurch ausgebildet sind. Denn so kann die beispielsweise als Rührer und/oder als Schneideinrichtung ausgebildete Rührvorrichtung beim Zubereiten des wenigstens einen zu erwärmenden Lebensmittels mittels der Küchenmaschine verwendet werden.

Vorzugsweise sind die miteinander fluchtenden Aussparungen im Wesentlichen mittig in dem Bodenteil angeordnet. Denn dies ist für einen mit der Rührvorrichtung erreichbaren Rührvorgang und/oder Schneidvorgang der zuzubereitenden Lebensmittel günstig.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer unterseitigen Perspektivansicht einen Heizboden beziehungsweise ein Bodenteil für eine Küchenmaschine, welches zwei ineinander verschränkte, hufeisenförmig gebogene Rohrheizkörper als Heizelemente aufweist;
- Fig. 2: das Bodenteil gemäß Fig. 1 in einer perspektivischen Schnittansicht;
- Fig. 3: eine Vergrößerung eines Ausschnitts der Schnittansicht gemäß Fig. 2;
- Fig. 4: den Heizboden gemäß Fig. 1 in einer Seitenansicht; und
- Fig. 5: eine Variante des Heizbodens gemäß Fig. 1 in einer Ansicht auf dessen Unterseite.

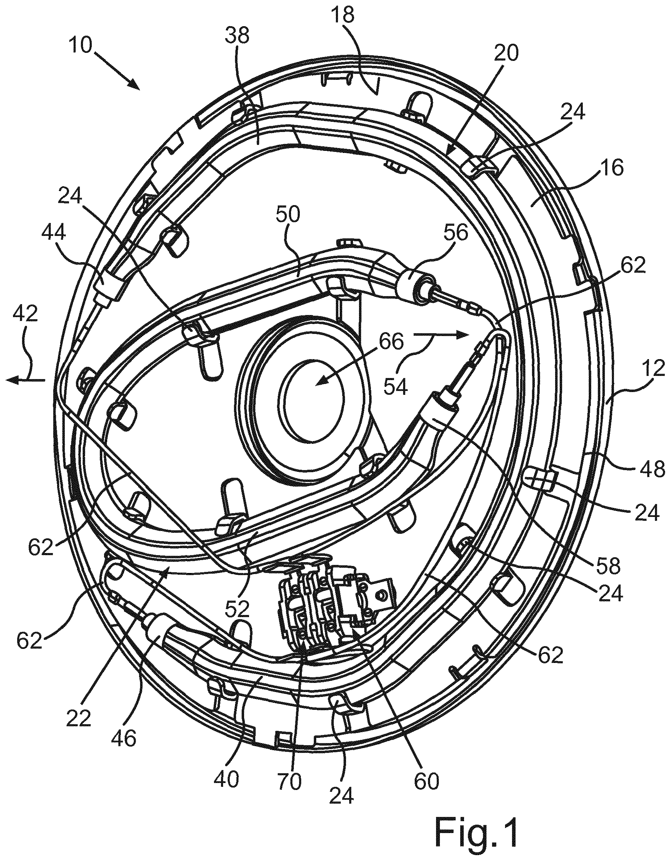

In Fig. 1 ist in einer Perspektivansicht auf eine Unterseite ein Bodenteil 10 für eine Küchenmaschine gezeigt. Wenn das Bodenteil 10 in der Küchenmaschine zum Einsatz kommt, so ist durch das Bodenteil 10 ein beheizbarer Boden der Küchenmaschine gebildet. Das Bodenteil 10 kann somit auch als Heizboden bezeichnet werden. Die (vorliegend nicht gezeigte) Küchenmaschine ist zum Erwärmen beziehungsweise Erhitzen und vorzugsweise zugleich zum Rühren und/oder Zerkleinern von Lebensmitteln ausgebildet. Bei der Herstellung der Küchenmaschine wird das Bodenteil 10 mit einem Mantelteil der beispielsweise topfförmigen Küchenmaschine verbunden. Auf diese Weise ist ein beheizbarer Topf oder Heiztopf der Küchenmaschine gebildet, in welchem sich vorzugsweise eine Rührvorrichtung, also etwa ein Rührer und/oder ein im Betrieb rotierendes Messer befindet.

Das Bodenteil 10 weist ein erstes Plattenelement auf, welches vorliegend als Edelstahlplatte 12 ausgebildet ist. Diese Edelstahlplatte 12 weist eine Oberseite 14 auf, auf welcher die mittels der Küchenmaschine zuzubereitenden, insbesondere zu erwärmenden beziehungsweise zu erhitzenden Lebensmittel im Betrieb der Küchenmaschine aufliegen. Mit anderen Worten ist im Betrieb der Küchenmaschine die Oberseite 14 der Edelstahlplatte 12 mit dem Kochgut beziehungsweise den zuzubereitenden Lebensmitteln in Kontakt.

Das Bodenteil 10 weist ein zweites Plattenelement auf, welches vorliegend als Trägerplatte 16 ausgebildet ist und insbesondere aus einer Aluminiumlegierung gebildet sein kann. Die Trägerplatte 16 dient zur Fixierung und Positionierung des wenigstens einen elektrischen Heizelements des Bodenteils 10. Vorliegend sind an einer Unterseite 18 der Trägerplatte 16 die beiden elektrischen Heizelemente in Form des ersten Rohrheizkörpers 20 und des zweiten Rohrheizkörpers 22 angeordnet. Ein Mantelmaterial der Rohrheizkörper 20, 22, mit welchem die Trägerplatte 16 in Kontakt ist, ist vorzugsweise aus einer Aluminiumlegierung gebildet.

Die Trägerplatte 16 weist vorliegend als Laschen 24 ausgebildete Halteelemente auf, welche die Rohrheizkörper 20, 22 in ihrer Lage bezogen auf die Trägerplatte 16 fixieren und/oder zum Halten eines Lotdrahtes dienen, wenn (wie bevorzugt) die Rohrheizkörper 20, 22 mit der Trägerplatte 16 verlötet sind. Die Laschen 24 sind vorliegend aus dem Material der Trägerplatte 16 herausgeschnitten beziehungsweise freigeschnitten und durch Biegen in eine Form gebracht, in welcher die Laschen 24 während des Lötprozesses die Rohrheizkörper 20, 22 an der Trägerplatte 16 fixieren beziehungsweise positionieren und/oder den Lotdraht halten.

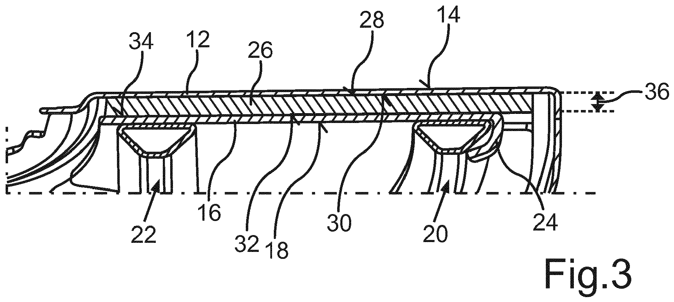

Das Bodenteil 10 weist ein drittes Plattenelement in Form einer Wärmeleitplatte 26 auf. Die Wärmeleitplatte 26 ist bevorzugt so wie auch die Trägerplatte 16 aus einer Aluminiumlegierung gebildet. Dementsprechend weist die Wärmeleitplatte 26 eine größere Wärmeleitfähigkeit auf als die Edelstahlplatte 12. Die Wärmeleitplatte 26 weist eine Oberseite 28 auf (vergleiche Fig. 3), welche mit einer Unterseite 30 der Edelstahlplatte 12 verbunden ist, insbesondere durch Löten stoffschlüssig verbunden ist. Des Weiteren weist die Wärmeleitplatte 26 eine Unterseite 32 auf, welche mit einer Oberseite 34 der Trägerplatte 16 verbunden ist, insbesondere stoffschlüssig durch Löten verbunden ist.

Vor und während des Lötprozesses halten weitere Laschen 72, 74, 78, welche vorliegend an einem äußeren Rand der Trägerplatte 16 ausgebildet sind, eine Sandwich-Anordnung aus der Trägerplatte 16, der Wärmeleitplatte 26 und der Edelstahlplatte 12 gegenüber einander beziehungsweise relativ zueinander in Position. So greifen umgebogene Laschen 72 in angepasste Aussparungen (nicht gezeigt) der Wärmeleitplatte 26, wodurch die Wärmeleitplatte 26 verdrehsicher und verschiebesicher gegenüber die Trägerplatte 16 positioniert ist. Weitere Laschen 74 der Trägerplatte 16 greifen in Ausparungen 76 ein, welche an einem zu der Trägerplatte 16 hin umgebogenen Rand der Edelstahlplatte 12 ausgebildet sind. Durch diese Laschen 74 ist eine Verdrehsicherheit der Trägerplatte 16 gegenüber der Edelstahlplatte 12 sichergestellt. Verschiebungen zwischen der Trägerplatte 16 und der Edelstahlplatte 12 in der Ebene der Trägerplatte 16 werden durch weitere Laschen 78 der Trägerplatte 16 verhindert, welche innen an dem umgebogenen Rand der Edelstahlplatte 12 anstehen beziehungsweise anliegen.

Bei dieser beispielhaft gezeigten Variante des Bodenteils 10 sind jeweils drei gleichartige solche Laschen 72, 74, 78 zur gegenseitigen Positionierung der Plattenelemente, also der Edelstahlplatte 12, der Trägerplatte 16 und der Wärmeleitplatte 26 relativ zueinander vorgesehen. Denkbar ist aber auch eine größere Anzahl oder eine geringere Anzahl der Laschen 72, der Laschen 74 und/oder der Laschen 78. Insbesondere sind jedoch bevorzugt mindestens zwei gleichartige jeweilige Laschen 72, 74, 78 vorgesehen.

Vorliegend weist die aus der Aluminiumlegierung gebildete Wärmeleitplatte 26 eine größere Dicke 36 (vergleiche Fig. 3) auf als die Trägerplatte 16. Die Trägerplatte 16 ist somit als dünne Aluminiumplatte ausgebildet und die Wärmeleitplatte 26 als dicke Aluminiumplatte.

Dementsprechend dient die dickere Wärmeleitplatte 26 als thermische Masse, welche für eine gleichmäßige Wärmeverteilung beziehungsweise Temperaturverteilung in der Ebene der Edelstahlplatte 12 sorgt. Mit anderen Worten treten im Bereich der Edelstahlplatte 12 in Richtung senkrecht zu der Dicke 36 der Wärmeleitplatte 26 (vergleiche Fig. 3) äußerst geringe Temperaturgradienten auf, wenn die Rohrheizkörper 20, 22 mit elektrischem Strom beaufschlagt werden, wie dies im Betrieb beziehungsweise Heizbetrieb des Bodenteils 10 der Fall ist.

Der gleichmäßigen Erwärmung des Bodenteils 10 beziehungsweise der Edelstahlplatte 12 des Bodenteils 10 (und somit des Topfbodens des Heiztopfs der Küchenmaschine) ist es des Weiteren zuträglich, dass vorliegend zwei Rohrheizkörper 20, 22 als elektrische Heizelemente an der Unterseite 18 der Trägerplatte 16 angeordnet sind. Die beiden Rohrheizkörper 20, 22 sind vorzugsweise U-förmig beziehungsweise hufeisenförmig gebogen und ineinander verschränkt. Dies bedeutet, dass sich zwei Schenkel 38, 40 des ersten Rohrheizkörpers 20 in eine erste Richtung hin zu freien Enden 44, 46 des ersten Rohrheizkörpers 20 erstrecken, welche in Fig. 1 durch einen Pfeil 42 veranschaulicht ist. Die Schenkel 38, 40 des ersten Rohrheizkörpers 20 sind jedoch vorliegend nicht geradlinig ausgebildet, sondern folgen im Wesentlichen dem Verlauf eines äußeren Rands 48 der Trägerplatte 16 beziehungsweise eines äußeren Rands der Edelstahlplatte 12, welche vorliegend rund ausgebildet ist.

In analoger Weise ist der zweite Rohrheizkörper 22 U-förmig beziehungsweise hufeisenförmig gebogen ausgebildet. Jedoch erstrecken sich hier zwei Schenkel 50, 52 des der zweiten Rohrheizkörpers 22 in eine der ersten Richtung (Pfeil 42) entgegengesetzte Richtung, welche in Fig. 1 durch einen weiteren Pfeil 54 veranschaulicht ist, hin zu freien Enden 56, 58 des zweiten Rohrheizkörpers 22. Auch die Schenkel 50, 52 des zweiten Rohrheizkörpers 22 erstrecken sich in diese zweite Richtung jedoch nicht streng gerade, sondern die Schenkel 50, 52 sind im Wesentlichen voneinander und von den Schenkeln 38, 40 des ersten Rohrheizkörpers 20 gleichmäßig beabstandet. Des Weiteren sind bei dem vorliegend gezeigten Bodenteil 10 die beiden Schenkel 38, 40 des ersten Rohrheizkörpers 20 in radialer Richtung näher an dem äußeren Rand 48 der Trägerplatte 16 angeordnet als die beiden Schenkel 50, 52 des zweiten Rohrheizkörpers 22.

Durch diese ineinander verschränkte beziehungsweise entgegengesetzt ausgerichtete Anordnung der beiden Rohrheizkörper 20, 22 lässt sich die im Betrieb des Bodenteils 10 von den Rohrheizkörpern 20, 22 freigesetzte Wärme besonders gleichmäßig auf die Trägerplatte 16 und dann weiter in die Wärmeleitplatte 26 und schließlich von dieser weiter auf die Edelstahlplatte 12 übertragen.

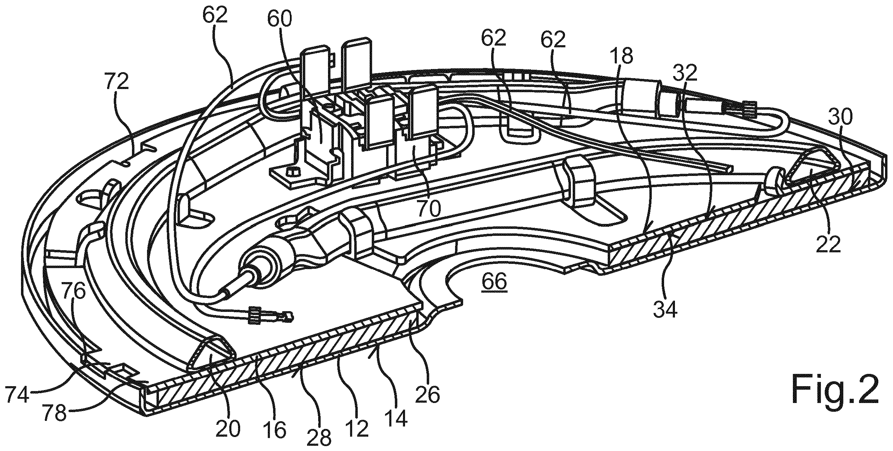

Bei dem in Fig. 1 gezeigten Bodenteil 10 sind zwei benachbart angeordnete Temperaturelemente 60, 70 an der Unterseite 18 der Trägerplatte 16 (vergleiche Fig. 2) befestigt. Bei diesen Temperaturelementen 60, 70 handelt es sich vorliegend um einen Temperaturregler und um eine Temperatursicherung. Mittels des Temperaturreglers wird die Temperatur der Rohrheizkörper 20, 22 überwacht, und die Temperatursicherung sorgt für eine Abschaltung der Rohrheizkörper 20, 22 im Fehlerfall. Von diesen Temperaturelementen 60, 70 verlaufen entsprechende Leitungen 62 zu den freien Enden 44, 46, 56, 58 der beiden Rohrheizkörper 20, 22. Vorliegend sind die Leitungen 62 derart an die freien Enden 44, 46, 56, 58 der Rohrheizkörper 20, 22 angeschlossen, dass diese beiden elektrischen Heizelemente beziehungsweise Rohrheizkörper 20, 22 elektrisch parallel, jedoch mit den Temperaturelementen 60, 70 in Reihe geschaltet sind. Hierbei steht jeweils eine Anschlussseite eines Temperaturelements 60, 70 mit jeweils einer elektrischen Versorgungsleitung (nicht gezeigt) direkt in Kontakt. Es ist jedoch in Varianten des Bodenteils 10 auch möglich, die Rohrheizkörper 20, 22 elektrisch seriell miteinander zu verbinden oder die Rohrheizkörper 20, 22 unabhängig voneinander zu schalten.

Des Weiteren besteht aufgrund des Verlötens der aus der Aluminiumlegierung gebildeten Wärmeleitplatte 26 mit der Edelstahlplatte 12 eine direkte Wärmeleitung von den Heizelementen in Form der Rohrheizkörper 20, 22 über die aus den Aluminiumlegierungen gebildeten weiteren Plattenelemente in Form der Trägerplatte 16 und der Wärmeleitplatte 26 hin zu der Edelstahlplatte 12 beziehungsweise den Edelstahlboden und somit hin zu dem Lebensmittel beziehungsweise dem Kochgut.

Die thermische Masse der aus der Aluminiumlegierung gebildeten Wärmeleitplatte 26 bewirkt also eine besonders gleichmäßige Erwärmung und Temperaturverteilung in der Ebene der Edelstahlplatte 12. Zudem ist durch das Vorsehen der Wärmeleitplatte 26 eine thermische Trägheit begünstigt, welche die Steuerung und Regulierung der Rohrheizkörper 20, 22 begünstigt. Durch die Lötverbindung der Trägerplatte 16 mit der Wärmeleitplatte 26 einerseits und durch die Lötverbindung der Wärmeleitplatte 26 mit der Edelstahlplatte 12 andererseits besteht also eine direkte Wärmeleitung von den Rohrheizkörpern 20, 22 hin zu der Edelstahlplatte 12. Durch die vergleichsweise große thermische Masse der Wärmeleitplatte 26 ist zudem eine große Robustheit gegenüber in kritischen Betriebszuständen des Bodenteils 10 auftretende Hotspots gegeben. Vorteilhaft ist es durch diese gleichmäßige Wärmeverteilung auch ermöglicht, mit nur zwei Temperaturelementen 60,70 einen sicheren Betrieb zu gewährleisten. Es ist sogar möglich, beide Temperaturelemente 60, 70 wie in Fig. 1 gezeigt direkt benachbart anzuordnen, ohne dass kritische Temperaturen an den Heizelementen beziehungsweise Rohrheizkörpern 20, 22 unerkannt bleiben. Vielmehr werden trotz einer vergleichsweise großen Entfernung der Temperaturelemente 60, 70 von etwa den Schenkeln 38, 50 der Rohrheizkörper 20, 22 derartige kritische Temperaturen zuverlässig erkannt.

Aus Fig. 1 ist des Weiteren ersichtlich, dass die Plattenelemente in Form der Edelstahlplatte 12, der Trägerplatte 16 und der Wärmeleitplatte 26 miteinander fluchtende Aussparungen 66 aufweisen. Diese vorliegend im Wesentlichen mittig in dem Bodenteil 10 ausgebildete Aussparung 66 ermöglicht es, die Rührvorrichtung der Küchenmaschine durch das Bodenteil 10 hindurchzuführen. Es kann also ein rotierendes Werkzeug wie etwa ein Rührwerkzeug und/oder ein zum Zerkleinern von mittels der Küchenmaschine zuzubereitenden Lebensmitteln ausgebildetes Messer durch den Topfboden beziehungsweise das Bodenteil 10 hindurch in die Küchenmaschine integriert werden.

Aus Fig. 2 und Fig. 3 ist die gegenüber einer jeweiligen Dicke der Edelstahlplatte 12 einerseits und der Trägerplatte 16 andererseits größere Dicke 36 der Wärmeleitplatte 26 gut ersichtlich.

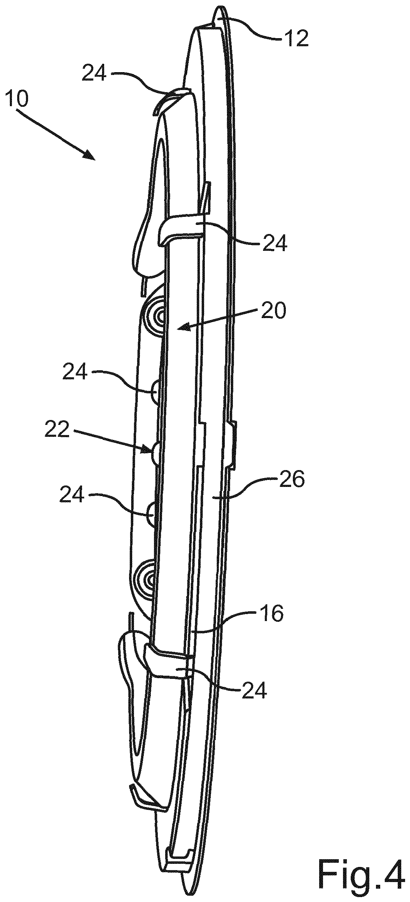

Auch aus Fig. 4 ist gut ersichtlich, dass sich durch die große Dicke 36 der Wärmeleitplatte 26 eine besonders gleichmäßige Erwärmung der Edelstahlplatte 12 des Bodenteils 10 erreichen lässt. Zudem geht aus Fig. 4 die ineinander verschränkte Anordnung der beiden Rohrheizkörper 20, 22 gut hervor.

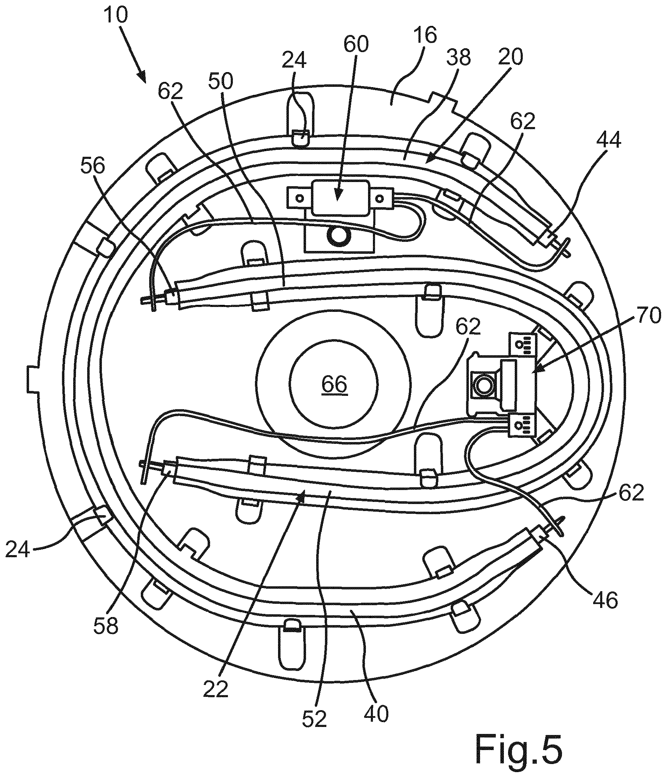

Auch bei der in Fig. 5 gezeigten Variante des Bodenteils 10 sind die beiden Rohrheizkörper 20, 22 parallel geschaltet. Dazu ist das freie Ende 44 des ersten Rohrheizkörpers 20 und das freie Ende 56 des zweiten Rohrheizkörpers 22 über jeweilige Leitungen 62 an ein erstes Temperaturelement 60 angeschlossen. Demgegenüber sind die Leitungen 62, welche mit dem anderen freien Ende 46 des ersten Rohrheizkörpers 20 und mit dem anderen freien Ende 58 des zweiten Rohrheizkörpers 22 verbunden sind, an ein weiteres, separates Temperaturelement 70 angeschlossen. Dadurch sind die beiden elektrisch parallel geschalteten Rohrheizkörper 20, 22 wiederum in Serie mit den beiden Temperaturelementen 60, 70 geschaltet. Auch bei den in Fig. 5 gezeigten Temperaturelementen 60, 70 handelt es sich um einen Temperaturregler und um eine Temperatursicherung. Und auch hier steht jeweils eine Anschlussseite eines Temperaturelements 60, 70 mit jeweils einer elektrischen Versorgungsleitung (nicht gezeigt) direkt in Kontakt.

Das erste Temperaturelement 60 befindet sich zwischen dem Schenkel 38 des ersten Rohrheizkörpers 20 und dem Schenkel 50 des zweiten Rohrheizkörpers 22. Das zweite Temperaturelement 70 befindet sich im Bereich einer U-förmigen Biegung des zweiten Rohrheizkörpers 22 und ist von dieser U-förmigen Biegung bereichsweise umschlossen.

## Patentansprüche

1. Bodenteil für eine zum Erwärmen von wenigstens einem Lebensmittel ausgebildete Küchenmaschine, mit einem ersten Plattenelement (12), dessen Oberseite (14) im Betrieb des Bodenteils (10) mit dem wenigstens einen Lebensmittel in Kontakt ist, und mit einem zweiten Plattenelement (16), welches mit wenigstens einem elektrischen Heizelement (20, 22) des Bodenteils (10) verbunden ist, wobei das Bodenteil (10) ein drittes Plattenelement (26) aufweist, dessen Oberseite (28) mit einer Unterseite (30) des ersten Plattenelements (12) verbunden ist, und dessen Unterseite (32) mit einer Oberseite (34) des zweiten Plattenelements (16) verbunden ist, wobei das dritte Plattenelement (26) eine größere Wärmeleitfähigkeit aufweist als das erste Plattenelement (12), wobei eine Dicke (36) des dritten Plattenelements (26) größer ist als eine Dicke des zweiten Plattenelements (16), **dadurch gekennzeichnet, dass** die Plattenelemente (12, 16, 26) durch Löten stoffschlüssig miteinander verbunden sind und/oder das wenigstens eine Heizelement (20, 22) durch Löten stoffschlüssig mit dem zweiten Plattenelement (16) verbunden ist.

2. Bodenteil nach Anspruch 1,
**dadurch gekennzeichnet, dass**
an einer Unterseite (18) des zweiten Plattenelements (16) wenigstens zwei elektrische Heizelemente (20, 22) angeordnet sind.

3. Bodenteil nach Anspruch 2,
**dadurch gekennzeichnet, dass**
die wenigstens zwei elektrischen Heizelemente (20, 22) U-förmig ausgebildet sind, wobei zwei Schenkel (38, 40) eines ersten der elektrischen Heizelemente (20, 22) sich in eine erste Richtung (42) hin zu freien Enden (44, 46) des ersten Heizelements (20) erstrecken, und wobei zwei Schenkel (50, 52) eines zweiten der elektrischen Heizelemente (20, 22) sich in eine der ersten Richtung (42) entgegengesetzte Richtung (54) hin zu freien Enden (56, 58) des zweiten Heizelements (22) erstrecken.

4. Bodenteil nach Anspruch 3,
**dadurch gekennzeichnet, dass**
die beiden Schenkel (38, 40) des ersten Heizelements (20) in radialer Richtung näher an einem äußeren Rand (48) des zweiten Plattenelements (16) angeordnet sind als die beiden Schenkel (50, 52) des zweiten Heizelements (22).

5. Bodenteil nach einem der Ansprüche 1 bis 4,
**dadurch gekennzeichnet, dass**
das zweite Plattenelement (16) und das dritte Plattenelement (26) aus demselben Material, insbesondere aus einer Aluminiumlegierung, gebildet sind, wobei die Dicke (36) des dritten Plattenelements (26) mindestens doppelt so groß ist wie die Dicke des zweiten Plattenelements (16) und/oder das erste Plattenelement (12) aus einem Edelstahl gebildet ist.

6. Bodenteil nach einem der Ansprüche 1 bis 5,
**dadurch gekennzeichnet, dass**
das zweite Plattenelement (16) wenigstens ein Halteelement (24) aufweist, durch welches das wenigstens eine Heizelement (20, 22) in seiner Lage bezogen auf das zweite Plattenelement (16) fixiert ist.

7. Bodenteil nach einem der Ansprüche 1 bis 6,
**dadurch gekennzeichnet, dass**
die Plattenelemente (12, 16, 26) durch Fixierelemente, insbesondere durch an dem zweiten Plattenelement (16) ausgebildete Laschen (72, 74, 78), relativ zueinander in ihrer Lage fixiert sind.

8. Bodenteil nach einem der Ansprüche 1 bis 7,
**dadurch gekennzeichnet, dass**
Abmessungen des zweiten Plattenelements (16) und des dritten Plattenelements (26) in einer zu dem ersten Plattenelemente (12) parallelen Ebene zumindest im Wesentlichen Abmessungen des ersten Plattenelements (12) in der Ebene des ersten Plattenelements (12) gleich sind.

9. Bodenteil nach einem der Ansprüche 1 bis 8,
**dadurch gekennzeichnet, dass**
die drei Plattenelemente (12, 16, 26) miteinander fluchtende, insbesondere im Wesentlichen mittig in dem Bodenteil (10) angeordnete, Aussparungen (66) aufweisen, welche zum Hindurchführen einer Rührvorrichtung der Küchenmaschine durch das Bodenteil (10) hindurch ausgebildet sind.

## Claims

1. A bottom part for a food processor formed for heating at least one food, including a first plate element (12), the top side (14) of which is in contact with the at least one food in the operation of the bottom part (10), and including a second plate element (16), which is connected to at least one electrical heating element (20, 22) of the bottom part (10),
wherein the bottom part (10) comprises a third plate element (26), the top side (28) of which is connected to a bottom side (30) of the first plate element (12), and the bottom side (32) of which is connected to a top side (34) of the second plate element (16), wherein the third plate element (26) has a greater thermal conductivity than the first plate element (12), wherein a thickness (36) of the third plate element (26) is larger than a thickness of the second plate element (16), **characterized in that** the plate elements (12, 16, 26) are connected to each other in firmly bonded manner by soldering and/or the at least one heating element (20, 22) is connected to the second plate element (16) in firmly bonded manner by soldering.

2. The bottom part according to claim 1,
**characterized in that**
at least two electrical heating elements (20, 22) are disposed on a bottom side (18) of the second plate element (16).

3. The bottom part according to claim 2,
**characterized in that**
the at least two electrical heating elements (20, 22) are formed U-shaped, wherein two legs (38, 40) of a first one of the electrical heating elements (20, 22) extend in a first direction (42) towards free ends (44, 46) of the first heating element (20), and wherein two legs (50, 52) of a second one of the electrical heating elements (20, 22) extend in a direction (54) opposite to the first direction (42) towards free ends (56, 58) of the second heating element (22).

4. The bottom part according to claim 3,
**characterized in that**
the two legs (38, 40) of the first heating element (20) are disposed closer to an outer edge (48) of the second plate element (16) in radial direction than the two legs (50, 52) of the second heating element (22).

5. The bottom part according to any one of claims 1 to 4,
**characterized in that**
the second plate element (16) and the third plate element (26) are formed of the same material, in particular of an aluminum alloy, wherein the thickness (36) of the third plate element (26) is at least twice as large as the thickness of the second plate element (16), and/or the first plate element (12) is formed of a stainless steel.

6. The bottom part according to any one of claims 1 to 5,
**characterized in that**
the second plate element (16) comprises at least one retaining element (24), by which the at least one heating element (20, 22) is fixed in its position related to the second plate element (16).

7. The bottom part according to any one of claims 1 to 6,
**characterized in that**
the plate elements (12, 16, 26) are fixed in their position in relation to each other by fixing elements, in particular by flaps (72, 74, 78) formed at the second plate element (16).

8. The bottom part according to any one of claims 1 to 7,
**characterized in that**
dimensions of the second plate element (16) and the third plate element (26) in a plane parallel to the first plate element (12) are at least substantially equal to dimensions of the first plate element (12) in the plane of the first plate element (12).

9. The bottom part according to any one of claims 1 to 8,
**characterized in that**
the three plate elements (12, 16, 26) comprise recesses (66) aligned with each other, in particular arranged substantially centrally in the bottom part (10), which are formed for passing a stirring device of the food processor through the bottom part (10).

## Revendications

1. Partie de fond pour une machine de cuisine, adaptée pour chauffer au moins un aliment, avec un premier élément de plaque (12) dont le côté supérieur (14) pendant l'opération de la partie de fond (10) est en contact avec l'au moins un aliment, et avec un second élément de plaque (16), qui est relié avec l'au moins un élément de chauffage électrique (20, 22) de la partie de fond (10),
dans lequel la partie de fond (10) comporte un troisième élément de plaque (26), dont le côté supérieur (28) est relié à un côté inférieur (30) du premier élément de plaque (12), et dont le côté inférieur (32) est relié à un côté supérieur (34) du second élément de plaque (16),
dans lequel le troisième élément de plaque (26) comporte une conductivité thermique supérieure au premier élément de plaque (12),
dans lequel une épaisseur (36) du troisième élément de plaque (26) est supérieure à une épaisseur du second élément de plaque (16),
**caractérisé en ce que**
les éléments de plaque (12, 16, 26) sont raccordés entre eux par brasage avec liaison de la matière, et/ou que l'au moins un élément de chauffage (20, 22) est raccordé au second élément de plaque (16) par brasage avec liaison de la matière.

2. Partie de fond selon la revendication 1,
**caractérisé en ce que**
sur un côté inférieur (18) du second élément de plaque (16) au moins deux éléments de chauffage électrique (20, 22) sont agencés.

3. Partie de fond selon la revendication 2,
**caractérisé en ce que**
les au moins deux éléments de chauffage électrique (20, 22) ont une forme en U,
dans lequel deux branches (38, 40) d'un premier des éléments de chauffage électrique (20, 22) s'étendent dans une première direction (42) vers des extrémités libres (44, 46) du premier élément de chauffage électrique (20), et
dans lequel deux branches (50, 52) d'un second des éléments de chauffage électrique (20, 22) s'étendent dans une direction opposée (54) à la première direction (42) vers des extrémités libres (56, 58) du second élément de chauffage (22).

4. Partie de fond selon la revendication 3,
**caractérisé en ce que**
les deux branches (38, 40) du premier élément de chauffage (20) dans la direction radiale sont agencées plus près d'un bord extérieur (48) du second élément de plaque (16) que les deux branches (50, 52) du second élément de chauffage (22).

5. Partie de fond selon l'une quelconque des revendications 1 à 4,
**caractérisé en ce que**
le second élément de plaque (16) et le troisième élément de plaque (26) sont réalisés du même matériau, surtout en alliage d'aluminium,
dans lequel l'épaisseur (36) du troisième élément de plaque (26) est au moins deux fois plus grande que l'épaisseur du second élément de plaque (16), et / ou le premier élément de plaque (12) est réalisé à partir d'un acier inoxydable.

6. Partie de fond selon l'une quelconque des revendications 1 à 5,
**caractérisé en ce que**
le second élément de plaque (16) comporte au moins un élément de retenue (24), par lequel l'au moins un élément de chauffage (20, 22) est fixé dans sa position par rapport au second élément de plaque (16).

7. Partie de fond selon l'une quelconque des revendications 1 à 6,
**caractérisé en ce que**
les éléments de plaque (12, 16, 26) sont fixés dans leur position les uns par rapport aux autres par des éléments de fixation, surtout par des languettes (72, 74, 78), formées au second élément de plaque (16).

8. Partie de fond selon l'une quelconque des revendications 1 à 7,
**caractérisé en ce que**
des dimensions du second élément de plaque (16) et du troisième élément de plaque (26), dans un plan parallèle au premier élément de plaque (12), ont au moins sensiblement les mêmes dimensions que le premier élément de plaque (12) dans le plan du premier élément de plaque (12).

9. Partie de fond selon l'une quelconque des revendications 1 à 8,
**caractérisé en ce que**
les trois éléments de plaque (12, 16, 26) comportent des évidements (66) s'alignant entre eux, surtout agencés sensiblement au centre de la partie de fond (10), qui sont configurés pour le passage d'un agitateur de la machine de cuisine à travers la partie de fond (10).
